# EUROPÄISCHE PATENTSCHRIFT

(11) **EP 2 295 907 B1**
(45) Veröffentlichungstag und Bekanntmachung des Hinweises auf die Patenterteilung: **04.05.2016**
(21) Anmeldenummer: 09169970.2
(22) Anmeldetag: 10.09.2009
(51) Int. Cl.: A23L 3/36, A23L 5/00

(54) **VAKUUMANLAGE ZUM ABKUEHLEN VON LEBENSMITTELN**
VACUUM ASSEMBLY FOR COOLING FOODS
INSTALLATION SOUS VIDE DESTINÉE À REFROIDIR DES ALIMENTS

(43) Veröffentlichungstag der Anmeldung: 16.03.2011
(73) Patentinhaber: Aston Foods AG, 6343 Rotkreuz (CH)
(72) Erfinder: Duss, Patrick, 6318 Walchwil (CH)
(74) Vertreter: Rentsch Partner AG

(56) Entgegenhaltungen:
- EP-A- 0 006 290
- EP-A- 0 485 675
- WO-A-2007/083562
- AU-B2- 629 715
- CH-A5- 690 743
- CN-Y- 201 293 512
- DE-A1- 19 654 460
- JP-A- 2 261 412
- JP-A- 2001 017 141
- JP-A- 2009 008 372
- US-A- 2 634 591
- US-A- 4 615 178
- US-A- 5 088 293

## Beschreibung

Die Erfindung betrifft eine Vakuumanlage zum Abkühlen von Lebensmitteln der im Oberbegriff des Anspruchs 1 genannten Art.

Eine solche Vakuumanlage eignet sich zum Abkühlen von verschiedenen Lebensmitteln, beispielsweise von Backwaren, unmittelbar nachdem diese fertig gebacken und aus dem Ofen herausgenommen worden sind, wie auch von gekochtem Gemüse, Flüssigkeiten wie Saucen, wie auch von Salaten, etc.

Eine Vakuumanlage gemäss dem Oberbegriff des Anspruchs 1 ist bekannt aus der EP 485675.
Aus der US 2634591 ist eine Vakuumanlage zum Abkühlen von Lebensmitteln, insbesondere von Salat und Popcorn, bekannt. Die Vakuumkammer ist ein liegender Zylinder. Kondensiertes Wasser wird am tiefsten Punkt der Vakuumkammer über ein Rohr in einen Sammeltank abgeführt. Im Boden des Sammeltanks ist ein Ventil angeordnet, das sich selbsttätig öffnet, sobald der Druck des auf dem Ventil lastenden Wassers grösser ist als der von einem Gegengewicht ausgeübte Schliessdruck.
Aus der US 4615178 ist eine Vakuumanlage zum Abkühlen von Lebensmitteln mit einer liegenden zylinderförmigen Vakuumkammer bekannt. Kondensiertes Wasser, das sich am tiefsten Punkt der Vakuumkammer ansammelt, wird mittels einer Pumpe abgeführt.
Aus der DE 19654460 sind Geräte und Räume zur Aufbewahrung von verderblichen Lebensmitteln bekannt, in denen ein Vakuum aufrechterhalten wird. Die Tür wird mit einem üblichen Vorreiber verschlossen.
Aus der WO 2007083562 ist eine Kühlanlage bekannt, die zuerst mit Vakuum und dann mit Kühlluft kühlt.
Aus der AU 629715, der JP 2001017141 und der CN 201293512 sind Anlagen zum Abkühlen von Lebensmitteln bekannt, die ausgebildet sind, um Kondenswasser zu sammeln und abzuführen.
Aus der US 5088293 ist eine Anlage zum Abkühlen von Lebensmitteln bekannt, bei der die Lebensmittel in einzelne Behälter gebracht werden. Die Behälter werden schrittweise durch die Anlage befördert, wobei sie bei jedem Schritt mit einer Vakuumpumpe verbunden werden und wobei das Vakuum von Schritt zu Schritt erhöht wird.

Auf dem Gebiet der industriellen Herstellung von Backwaren haben sich bis heute noch keine Vakuumanlagen zum Abkühlen der Backwaren durchsetzen können, da es bisher nicht gelungen ist, die notwendigen Anforderungen an die Hygiene zu erfüllen. Insbesondere besteht das Problem, dass sich in der Vakuumkammer Bakterien ansammeln.

Der Erfindung liegt die Aufgabe zugrunde, eine Vakuumanlage zum Abkühlen von Lebensmitteln zu entwickeln, die das Abkühlen auf hygienisch einwandfreie und wirtschaftliche Weise ermöglicht.

Die Erfindung ist im Anspruch 1 gekennzeichnet. Weiterbildungen der Erfindung ergeben sich aus den abhängigen Ansprüchen.

Die Erfindung wird nachfolgend anhand eines Ausführungsbeispiels und anhand der Zeichnung näher erläutert.
- Fig. 1: zeigt in schematischer Darstellung eine Vakuumanlage mit einer Vakuumkammer zum Abkühlen von Lebensmitteln, und
- Fig. 2: zeigt den Boden der Vakuumkammer und Teile eines Belüftungssystems in Aufsicht, und
- Fig. 3: illustriert eine vorteilhafte Lösung zur Zuführung des Vakuums zur Vakuumkammer.

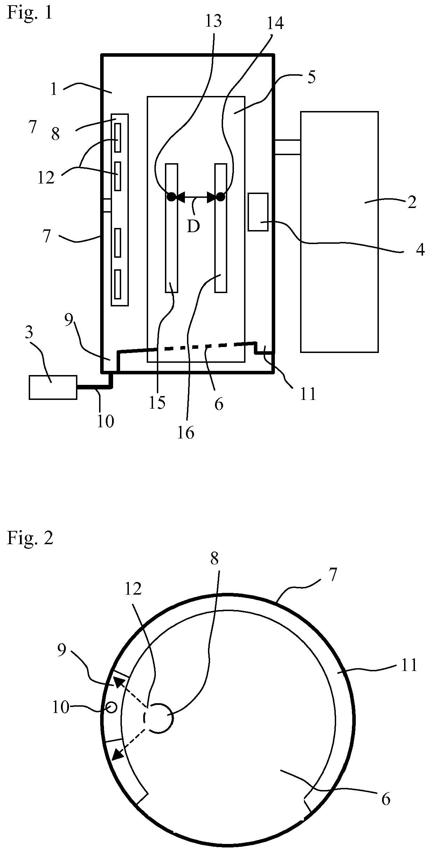

Die Fig. 1 zeigt in schematischer Darstellung eine Vakuumanlage zum Abkühlen von Lebensmitteln. Die Vakuumanlage ist nicht massstäblich gezeichnet, um Einzelheiten der Erfindung deutlicher zum Ausdruck zu bringen. Die Vakuumanlage umfasst eine Vakuumkammer 1, eine Vakuumpumpe 2, eine Pumpe 3 zum Abführen von Wasser, das sich in der Vakuumkammer 1 angesammelt hat, sowie eine Steuereinheit 4, die die Vakuumanlage steuert.

Die Vakuumkammer 1 enthält eine Türe 5, durch die ein Wagen mit den heissen, abzukühlenden Lebensmitteln in die Vakuumkammer 1 gebracht und nach dem Abkühlen wieder herausgenommen wird. Der Wagen enthält eine Vielzahl von Tablaren oder Blechen, auf denen die Lebensmittel liegen. Ein solcher Wagen ist typischerweise etwa mannshoch.

Das Innere der Vakuumkammer 1 ist begrenzt durch einen Boden 6, eine Seitenwand 7 und eine Decke. Die Vakuumkammer 1 kann eine beliebige Form aufweisen. Die Seitenwand 7 ist in Aufsicht gesehen bevorzugt rund, insbesondere kreisförmig. Die Fig. 2 zeigt den Boden 6 einer Vakuumkammer 1 mit einem kreisförmigen Grundriss und ein Rohr 8 eines Belüftungssystems in Aufsicht.

Um die Probleme und die zur Lösung der Probleme entwickelten technischen Lösungen einer solchen Vakuumanlage besser zu verstehen, wird zunächst der Betrieb der Vakuumanlage kurz beschrieben. Die Vakuumanlage wird bei der industriellen Herstellung von Lebensmitteln eingesetzt, um Lebensmittel innert einer kurzen Zeit von wenigen Minuten auf eine für die Weiterverarbeitung nötige Temperatur abzukühlen. Beispiele sind heisse Backwaren, sobald sie aus dem Ofen kommen, oder heisses gekochtes Gemüse, sobald der Kochprozess abgeschlossen ist. Der Abkühlungsprozess in der Vakuumkammer umfasst die folgenden Schritte:
A) Befördern eines Wagens, auf dem die heissen Lebensmittel auf Blechen oder Tablaren liegen, in die Vakuumkammer 1 hinein und Schliessen der Türe 5.
B) Beaufschlagen der Vakuumkammer 1 mit Vakuum. Der Druck in der Vakuumkammer 1 wird dabei auf einen Wert der Grössenordnung von typischerweise 5 mbar gesenkt. Dabei kühlen sich die Lebensmittel ab.
C) Belüften der Vakuumkammer 1.
D) Öffnen der Türe 5 und Herausnehmen des Wagens mit den abgekühlten Lebensmitteln.

Bei diesem Prozess wird in den Lebensmitteln enthaltene Feuchtigkeit freigesetzt, die teilweise von der Vakuumpumpe 1 abgesogen wird und die teilweise an der Innenwand als Kondenswasser anfällt. Dieses Kondenswasser muss von Zeit zu Zeit entfernt werden.

Die Vakuumanlage ist bevorzugt so ausgebildet, dass während des Betriebs anfallendes Kondenswasser abgeführt werden kann. Dazu ist der Boden 6 der Vakuumkammer 1 mit einer Vertiefung 9 versehen, in der sich das Wasser ansammelt. Die Vertiefung 9 ist somit ein Wassersammelbecken. Die Vertiefung 9 hat einen Ablauf 10, der zur Aussenseite der Vakuumkammer 1 führt und im Beispiel an eine Pumpe 3 angeschlossen ist.

Um das Wasser auf eine effektive Weise einzusammeln, sind mit Vorteil folgende zusätzlichen Massnahmen vorgesehen:
1) Der Boden 6 ist entlang der Seitenwand 7 der Vakuumkammer 1 mit einer Rille 11 versehen, die in die Vertiefung 9 mündet. Die Rille 11 ist im Bereich der Türe 5 mit Vorteil unterbrochen oder sehr schmal, damit der Wagen mit den Lebensmitteln problemlos in die Vakuumkammer hinein- und herausgefahren werden kann.
2) Der Boden 6 ist gegenüber der Vertikalen um einen vorbestimmten Winkel von wenigen Grad geneigt, so dass auf dem Boden 6 anfallendes Wasser in die Rille 11 fliesst. Diese Neigung des Bodens 6 ist in der Fig. 1 aus Gründen der zeichnerischen Klarheit stark vergrössert dargestellt.

Der Abkühlungsprozess in der Vakuumkammer 1 umfasst demzufolge die oben angegebenen Schritte A bis D, sowie den zusätzlichen Schritt:
E) Abführen des in der Vertiefung 9 angesammelten Wassers.
Dies erfolgt mit Vorteil durch kurzzeitiges Betätigen der Pumpe 3. Der Schritt E wird vollautomatisch nach dem Ende des Schrittes C ausgelöst, wenn der Druck im Inneren der Vakuumkammer 1 wieder annähernd den Umgebungsdruck erreicht hat. Der Schritt E kann deshalb vor, während oder nach dem Schritt D durchgeführt werden.

Die Pumpe 3 ist bevorzugt eine Membranpumpe mit dem Vorteil, dass sie die Vakuumkammer 1 im ausgeschalteten Zustand druckmässig von der Umgebung trennt, so dass im Ablauf 10 kein Ventil angeordnet werden muss.

Der Einsatz der Pumpe 3 zum Abführen des in der Vertiefung 9 angesammelten Wassers ist bei den meisten Abkühlungsprozessen zweckmässig, da dadurch sichergestellt ist, dass der Ablauf 10 im Laufe der Zeit nicht verschmutzt und nicht verstopft wird. Bei Abkühlungsprozessen von Lebensmitteln, bei denen Schmutz und andere Partikel kein Problem darstellen, kann anstelle der Pumpe 3 ein Ventil verwendet werden, das im Normalzustand geschlossen und für den Schritt E temporär geöffnet wird, bis das in der Vertiefung 9 angesammelte Wasser unter dem Einfluss der Schwerkraft ausgelaufen ist.

Die Vakuumkammer 1 ist erfindungsgemäss so ausgebildet, dass mit den Lebensmitteln eingeschleppte Bakterien, die sich an der Seitenwand 7 der Vakuumkammer 1 ablagern, auf einfache Weise entfernt werden können bzw. sich an der Seitenwand 7 nicht mehr festkrallen können. Die Vakuumkammer 1 ist deshalb zylinderförmig mit einer ovalen oder bevorzugt kreisförmigen Grundfläche bzw. Boden 6 ausgebildet. Für die Belüftung der Vakuumkammer 1 im Schritt C ist ein Belüftungssystem mit einem Rohr 8 vorgesehen, das im Abstand zur Seitenwand 7 angeordnet ist und bevorzugt parallel zur Seitenwand 7 verläuft. Das Rohr 8 hat einen Anschluss für die Zuführung von Frischluft und enthält mehrere Schlitze 12, die so angeordnet sind, dass die aus dem Rohr herausgeblasene Luft schräg auf die Seitenwand 7 auftrifft und damit im Inneren der Vakuumkammer 1 Luftwirbel erzeugt, die an der Seitenwand 7 abgelagerte Partikel, insbesondere Bakterien, von der Seitenwand 7 wegblasen. Im Beispiel sind acht Schlitze 12 vorhanden, die in zwei senkrecht verlaufenden Reihen mit je vier Schlitzen angeordnet sind. Die Richtung der durch die Schlitze 12 hinausgeblasenen Luft ist in der Fig. 2 durch zwei Pfeile dargestellt. Die runde Form des Bodens 6 bedeutet eine gebogene Form der Seitenwand 7. Die Seitenwand 7 hat somit keine Ecken. Auf diese Weise werden Totzonen, in denen die Luft während der Belüftung nicht durcheinander gewirbelt wird, vermieden. Die Länge des Rohrs 8 ist in Bezug auf die Höhe der Seitenwand 7 mit Vorteil so bemessen, dass es von oben und von unten für die Reinigung zugänglich ist.

Um das Festkrallen von Bakterien an den Innenwänden der Vakuumkammer 1 von vornherein zu verunmöglichen, sind die Seitenwand 7, der Boden 6 und die Decke mit Vorteil zudem auf eine Rauigkeit Ra von höchstens Ra = 5 Mikrometer, bevorzugt auf eine Rauigkeit von Ra = 0.4 Mikrometer geschliffen.

Die Vakuumkammer 1 ist für eine rasche Abkühlung einer Lebensmittelcharge nach der anderen konzipiert. Dazu wird mit Vorteil auf ein mechanisches Verriegeln der Türe 5 verzichtet. Die Türe 5 wird einzig durch das im Inneren der Vakuumkammer 1 herrschende Vakuum geschlossen gehalten. Diese Lösung hat den sicherheitstechnischen Vorteil, dass die Türe 5 im Notfall jederzeit von Innen aufgedrückt werden kann, mindestens solange, als das Vakuum noch nicht zu gross ist. Die Türe 5 ist mit zwei Startknöpfen 13 und 14 versehen, die im Abstand D zueinander angeordnet sind. Der Abstand D ist so gross, dass die beiden Startknöpfe 13 und 14 nicht gleichzeitig von den Fingern von nur einer Hand eines Operateurs betätigt werden können. Um die Türe 5 zu öffnen und zu schliessen, weist sie mindestens einen Griff auf. Der Startknopf 13 ist am mindestens einen Griff angeordnet. Im Beispiel hat die Türe 5 zwei Griffe 15 und 16 und der Startknopf 13 ist am Griff 15 und der Startknopf 14 am Griff 16 angeordnet. Um den Abkühlungsprozess zu starten, muss der Operateur gemäss dem Schritt A die Türe 5 schliessen und anschliessend beide Startknöpfe 13 und 14 innerhalb einer vorbestimmten Zeitspanne drücken, um die Durchführung der Schritte B bis E auszulösen. Diese Lösung mit den beiden Startknöpfen 13 und 14 gewährleistet, dass der Operator keinen Finger einklemmen kann und auch, dass der Schritt B nicht unbeabsichtigt ausgelöst werden kann. Aus Sicherheitsgründen ist zudem mit Vorteil vorgesehen, mittels mindestens eines Sensors, der beispielsweise ein mechanischer Schalter sein kann, zu überwachen, ob sich ein Wagen in der Vakuumkammer 1 befindet, und die Steuereinheit 4 ist so programmiert, dass der Abkühlungsprozess nicht gestartet werden kann, wenn das Ausgangssignal des Sensors die Information enthält, dass kein Wagen in der Vakuumkammer 1 ist. Dies gewährleistet, dass die Vakuumkammer 1 nicht mit Vakuum beaufschlagt werden kann, wenn sich ein Mensch in der Vakuumkammer 1 befindet, da ein Wagen und ein Mensch nicht gleichzeitig in der Vakuumkammer 1 Platz haben.

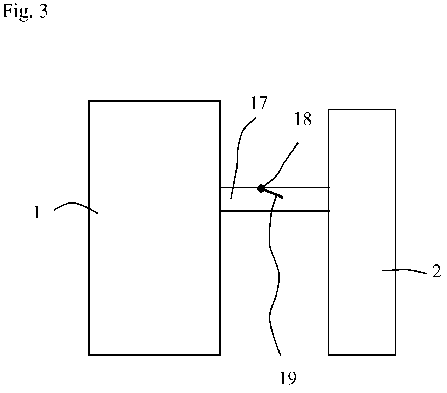

Die Vakuumanlage ist für eine optimale Abkühlung von Backwaren konzipiert. Um die Abkühlung optimal und energieeffizient durchführen zu können, wird die Vakuumpumpe 2 mit Vorteil immer mit der gleichen Leistung betrieben und die am Anschluss der Vakuumkammer 1 wirksame Saugleistung mittels einer Klappe gedrosselt. Die Fig. 3 zeigt die Vakuumkammer 1, die Vakuumpumpe 2 und die Verbindungsleitung 17, die die Vakuumkammer 1 mit der Vakuumpumpe 2 verbindet. In der Verbindungsleitung 17 ist eine um eine Achse 18 drehbare, von einem Motor angetriebene Klappe 19 angeordnet, deren Stellung steuerbar ist. Die Stellung der Klappe 19 wird von der Steuereinheit 4 gesteuert. Eine solche motorbetriebene Klappe 19 ist auch als Butterfly-Ventil bekannt.

Die Vakuumkammer 1 enthält zudem mit Vorteil mindestens einen Temperatursensor und mindestens einen Drucksensor, um den Abkühlungsprozess überwachen, steuern oder regeln zu können.

## Patentansprüche

1. Vakuumanlage zum Abkühlen von Lebensmitteln, mit einer Vakuumkammer (1) zur Aufnahme der Lebensmittel, die durch einen Boden (6), eine Seitenwand (7) und eine Decke begrenzt ist und die einen Anschluss zum Zuführen von Vakuum aufweist, **dadurch gekennzeichnet, dass** die Seitenwand (7) der Vakuumkammer (1) keine Ecken aufweist und dass in der Vakuumkammer (1) im Abstand zur Seitenwand ein Rohr (8) angeordnet ist, das Schlitze (12) aufweist, die so angeordnet sind, dass zum Belüften der Vakuumkammer (1) aus dem Rohr (8) durch die Schlitze (12) hinausgeblasene Luft schräg auf die Seitenwand (7) der Vakuumkammer (1) auftrifft.

2. Vakuumanlage nach Anspruch 1, **dadurch gekennzeichnet, dass** die Seitenwand (7), der Boden (6) und die Decke auf eine Rauigkeit Ra von höchstens 5 Mikrometer geschliffen sind.

3. Vakuumanlage nach Anspruch 1 oder 2, **dadurch gekennzeichnet, dass** der Boden (6) der Vakuumkammer (1) eine Vertiefung (9) mit einem Ablauf (10) zum Abführen von Wasser aufweist.

4. Vakuumanlage nach Anspruch 3, **dadurch gekennzeichnet, dass am** Ablauf (10) eine Pumpe (3) angeschlossen ist, um in der Vertiefung (9) angesammeltes Wasser abzupumpen.

5. Vakuumanlage nach Anspruch 3 oder 4, **dadurch gekennzeichnet, dass** der Boden (6) der Vakuumkammer (1) eine entlang der Seitenwand (7) zumindest teilweise umlaufende Rille (11) aufweist, die in die Vertiefung (9) mündet.

6. Vakuumanlage nach einem der Ansprüche 1 bis 5, **dadurch gekennzeichnet, dass** der Boden (6) der Vakuumkammer (1) gegenüber der Vertikalen um einen vorbestimmten Winkel geneigt ist.

7. Vakuumanlage nach einem der Ansprüche 1 bis 6, **dadurch gekennzeichnet, dass** die Vakuumkammer (1) eine Türe (5) ohne mechanischen Verriegelungsmechanismus aufweist und dass die Türe (5) mindestens einen Startknopf (13) aufweist, um einen Abkühlungsprozess zu starten.

8. Vakuumanlage nach einem der Ansprüche 1 bis 7, **dadurch gekennzeichnet, dass** die Vakuumkammer (1) und die Vakuumpumpe (2) mittels einer Verbindungsleitung (17) verbunden sind, in der eine um eine Achse (18) drehbare Klappe (19) angeordnet ist.

## Claims

1. Vacuum system for cooling foods, having a vacuum chamber (1) which is intended for accommodating the foods, is delimited by a floor (6), a side wall (7) and a ceiling and has a connection for supplying a vacuum, **characterized in that** the side wall (7) of the vacuum chamber (1) does not have any corners, and **in that** the vacuum chamber (1) has arranged in it, at a distance from the side wall, a tube (8) which has slots (12) which are arranged such that air blown out of the tube (8) through the slots (12), for the purpose of ventilating the vacuum chamber (1), strikes the side wall (7) of the vacuum chamber (1) obliquely.

2. Vacuum system according to Claim 1, **characterized in that** the side wall (7), the floor (6) and the ceiling are ground to a roughness Ra of not more than 5 micrometres.

3. Vacuum system according to Claim 1 or 2, **characterized in that** the floor (6) of the vacuum chamber (1) has a depression (9) with a drain (10) for channelling away water.

4. Vacuum system according to Claim 3, **characterized in that** a pump (3) is connected to the drain (10) in order to pump out water collected in the depression (9).

5. Vacuum system according to Claim 3 or 4, **characterized in that** the floor (6) of the vacuum chamber (1) has a channel (11) which runs along at least part of the side wall (7) and opens out into the depression (9).

6. Vacuum system according to one of Claims 1 to 5, **characterized in that** the floor (6) of the vacuum chamber (1) is inclined by a predetermined angle in relation to the vertical.

7. Vacuum system according to one of Claims 1 to 6, **characterized in that** the vacuum chamber (1) has a door (5) without a mechanical locking mechanism, and **in that** the door (5) has at least one start button (13) for starting a cooling process.

8. Vacuum system according to one of Claims 1 to 7, **characterized in that** the vacuum chamber (1) and the vacuum pump (2) are connected by means of a connecting line (17), in which is arranged a flap (19) which can be rotated about an axis (18).

## Revendications

1. Installation sous vide destinée à refroidir des aliments, avec une chambre sous vide (1) destinée à contenir les aliments, qui est délimitée par un fond (6), une paroi latérale (7) et un plafond et qui présente un raccord pour la connexion du vide, **caractérisée en ce que** la paroi latérale (7) de la chambre sous vide (1) ne présente aucun angle et **en ce qu'**un tube (8) est disposé dans la chambre sous vide (1) à distance de la paroi latérale, lequel présente des fentes (12) qui sont agencées de telle manière que de l'air insufflé hors du tube (8) à travers les fentes (12) pour aérer la chambre sous vide (1) arrive en oblique sur la paroi latérale (7) de la chambre sous vide (1).

2. Installation sous vide selon la revendication 1, **caractérisée en ce que** la paroi latérale (7), le fond (6) et le plafond sont polis jusqu'à une rugosité Ra de 5 micromètres au maximum.

3. Installation sous vide selon la revendication 1 ou 2, **caractérisée en ce que** le fond (6) de la chambre sous vide (1) présente un creux (9) avec une évacuation (10) pour l'écoulement d'eau.

4. Installation sous vide selon la revendication 3, **caractérisée en ce qu'**une pompe (3) est raccordée à l'évacuation (10), afin de pomper l'eau accumulée dans le creux (9).

5. Installation sous vide selon la revendication 3 ou 4, **caractérisée en ce que** le fond (6) de la chambre sous vide (1) présente le long de la paroi latérale (7) une rigole (11) au moins partiellement périphérique, qui débouche dans le creux (9).

6. Installation sous vide selon l'une quelconque des revendications 1 à 5, **caractérisée en ce que** le fond (6) de la chambre sous vide (1) est incliné d'un angle prédéterminé par rapport à la verticale.

7. Installation sous vide selon l'une quelconque des revendications 1 à 6, **caractérisée en ce que** la chambre sous vide (1) présente une porte (5) sans mécanisme de verrouillage mécanique et **en ce que** la porte (5) présente au moins un bouton de démarrage (13), destiné à faire démarrer un processus de refroidissement.

8. Installation sous vide selon l'une quelconque des revendications 1 à 7, **caractérisée en ce que** la chambre sous vide (1) et la pompe à vide (2) sont reliées par une conduite de liaison (17), dans laquelle est disposé un clapet (19) pouvant tourner autour d'un axe (18).
